# EUROPEAN PATENT APPLICATION

(11) **EP 4 632 983 A1**
(43) Date of publication of application: **15.10.2025**
(21) Application number: 24170037.6
(22) Date of filing: 12.04.2024
(51) Int. Cl.: H02J 1/08, H02J 5/00

(54) **METHOD OF OPERATING AN HVDC NETWORK AND AN HVDC NETWORK**

(71) Applicant: Siemens Energy Global GmbH & Co. KG, 81739 München (DE)
(72) Inventor: Westerweller, Thomas, 96135 Stegaurach (DE)

(57) **Abstract**

The present invention relates to a method of operating an HVDC network (1), said HVDC network comprising a first network unit (13) connected to at least a second network unit (16), and a switching unit (19) for connecting and disconnecting said first and said second network unit, the method comprising the steps of determining an initial operating state of said first network unit (13), determining a target operating state for said first network unit (16), wherein said initial and said target operating states each depend on presence or absence of an operating voltage at said first network unit, and the number of network units connected to said first network unit, transferring said first network unit (13) from said initial to said target operating state by means of said switching unit (19). Further the present invention relates to an HVDC network configured to be operated according to the above method.

## Description

The present invention relates to a method of operating an HVDC network, said HVDC network comprising a first network unit connected to at least a second network unit, and a switching unit for connecting and disconnecting said first and said second network unit.

Generally, an HVDC network (HVDC grid) comprises one or several connected HVDC lines, HVDC operating equipment, such as converters (AC/DC and/or DC/DC), energy storage devices, DC choppers, DC cables, DC overhead lines (or cables), DC circuit breakers, energy sources (e.g., PV plants) and suitable loads. The present invention particularly relates to high-voltage DC networks, i.e., networks with a nominal voltage of more than 100 kV. In contrast to previously known and frequently implemented point-to-point HVDC connections, HVDC multi-terminal or meshed systems generally have the task of connecting more than one DC line and more than two AC/DC converters (in many applications more than three converters), and other operating equipment.

Technical systems like an HVDC grid and its components which can take different states need a state control which determines the actual state and controls the boundary condition to be observed in each of these states. Further, the state control handles the sequences necessary to change from one state to the other and prevents inadmissible transitions. To describe the possible states of the system a graphical representation of all possible states and the admissible transitions (such representation is called state diagram) may be developed. Necessary actions for every possible transition between states are defined and designated as corresponding sequences. The task of the state control is to implement these sequences on a control level. A shortcoming of this approach is that the complexity of such state diagrams - and hence the complexity of the corresponding state control - increases exponentially with the number of independent states that the technical system can take. This in turn dramatically increases the engineering efforts as well as the risk of "flaws in the weave" due to unsolved inconsistencies or conflicts. In addition, the complexity of such a closed system usually does not support the modularity required for expandability of the system, i.e., an expansion of the system typically involves a complete redesign of the state diagram/control.

The object of the invention is to provide an above-mentioned method of operating an HVDC network that allows an efficient state control.

This object is achieved by a method according to claim 1.

According to the invention the method comprises the steps of determining an initial operating state of said first network unit, determining a target operating state for said first network unit, wherein said initial and said target operating states each depend on presence or absence of an operating voltage at said first network unit, and a number of network units connected to said first network unit, and transferring said first network unit from said initial to said target operating state by means of said switching unit.

The HVDC network is divided into its smallest functional building blocks (units). A network unit is suitably defined as a part of a network element (i.e. a set components providing a given functionality in the network) that can have a connection status that is independent from the connection states of the other units within the element. The states of the network units are then defined in a standardized form.

The invention takes advantage of the fact that the status of a particular network unit depends on the connection status at its interfaces to the neighboring units and - if connected - on the presence or absence of a corresponding operating voltage. Consequently, the state of a network unit changes solely with changes in these to conditions and further information is not required by the network unit state control. In consequence this leads to a modularization of the state control and its state diagram representation. Expansions of the system only impact the state controls of the concerned units (new neighboring network units).

According to an embodiment of the invention the respective operating state of said first network unit further depends on an operating state of an earthing switch connected to said first network unit. The earthing switch ensures a connection of the unit to the ground potential (to ensure protective insulation for servicing or maintenance). As a prerequisite it can be assumed that closing of earthing switches within a unit is only possible when the unit is not connected to another unit (similar to the interlocking between grounding switches and disconnecting switches in an AC network).

Suitably the respective operating state of said first network unit is the same for any number of a plurality of network units connected to said first network unit. Accordingly, the operating state only distinguishes between the respective unit being connected to no other network unit, only one other network unit or being connected to at least two other network units.

Preferably the respective operating state of said first network unit does not depend on any further information besides those mentioned above. This allows a simple and standardized definition of the operating states that does not depend on the specifics of different network units. Other properties of a given state are suitably regarded as preconditions for a subsequent state change.

According to an embodiment of the invention the respective operating state of said first network unit is one of six predefined states: a grounded state, a first standby state, a second standby state, a third standby state, a live state, and a coupled state. The operating states suitably differ from each other by the combination of two criteria. The first criterium is the energization status. Basically, this denotes the presents (or absence) of the operating voltage. Secondly, the number of neighboring units to which the first network unit is connected (closed switching units between the units) is a characteristic feature. In case of a bus unit, the number of connected units can range between zero and a total number of n units that maximally can be connected to the given bus unit. Each transition between the individual states is only a closing or opening of a single switching unit (defining a gate sequence) arranged between the respective network units.

According to such embodiment, the first network unit (and correspondingly any other network unit present in the HVDC network) is connected to a plurality of network units via corresponding plurality of switching units. The transferring of the first network unit from its initial state to the target operating state is achieved by operating said switching units in accordance with a predefined gate sequence.

In case of a bus unit, most of the transitions will be achieved by a gate sequence involving a switching unit of the same switching element (local). However, some transitions might be caused by a gate sequence in a different switching element (remote). This might be an important factor as the state control must be prepared for the possibility that the unit state changes without local action. This can, for example, play an important role in the coordination of protections.

Preferably, an operating of said switching units comprises a limiting of an inrush current that might occur during the opening/closing of the respective switching unit (e.g., as achieved by performing a given gate sequence) or other means to control the transient impact of such switching to the network.

Preferably, the transferring said first network unit from the initial to the target operating state is initiated by an HVDC network controller for controlling the operation of the network.

The present invention further relates to an HVDC network comprising a first network unit connected to at least a second network unit, a switching unit for connecting and disconnecting said first and said second network unit, and an HVDC network controller configured to operate said HVDC network.

The object of the invention is to provide such an HVDC network that allows an efficient state control.

This object is achieved by an HVDC network according to claim 9. Accordingly, the network controller is configured to operate the HVDC network in accordance with the method described above.

Suitably, each of said first and second network unit is a converter unit, a transmission unit, an electrode unit or a bus unit. However, this list is not complete, there might be other possible kinds of units present in an HVDC network.

The invention is explained below with reference to exemplary embodiment illustrated in the figures 1 to 2.
Figure 1 shows a schematic view of an HVDC network according to the invention;
Figure 2 shows a schematic view of state diagrams and a state transition for network units.

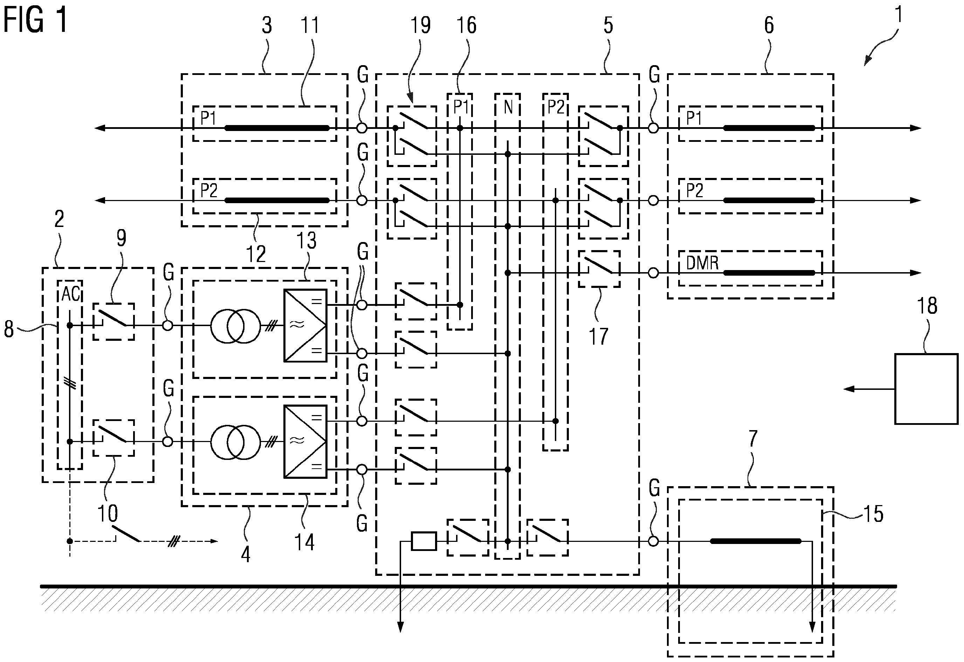

Figure 1 shows an example of an HVDC network 1. The network 1 comprises several network elements that in turn comprise network units. According to the example shown in figure 1 the network elements are:
An AC switching element 2,
DC transmission elements 3, 6,
An AC/DC converter element 4,
A DC switching element 5,
A DC electrode element 7.

Each of the network elements may comprise one or more constituent parts. For example, the AC switching element 2 comprises an AC bus 8 and two switching units 9, 10. The DC transmission element 3 comprises a first and a second transmission unit 11, 12. The AC/DC converter element comprises two converter units 13, 14. The DC electrode element comprises an electrode unit 15. The DC switching element 5 comprises several units, e.g., a bus unit 16 and a switching unit 17.

Each network unit is connected to another network unit via a gate coupling point G located between them. By closing the switching unit next to the coupling point G the respective connection can be established. By opening the switching unit the connection is separated.

The HVDC network 1 further comprises a network controller 18 configured to control and operate the HVDC network 1.

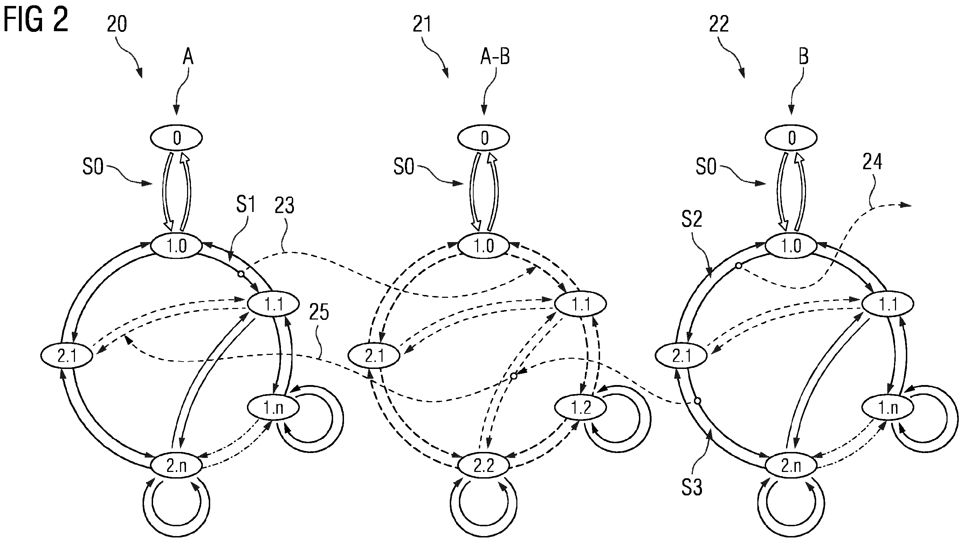

Figure 2 shows an example of three network units, their states and transition between the states. A first state diagram 20 represents the states of a first bus unit A. A second state diagram 21 represents the states of a transmission unit A-B. A third state diagram 22 represents the states of a second bus unit B. Each of the ovals within the state diagrams 21-23 represents one of the possible states of the corresponding unit. The arrows between the ovals represent possible transitions between the states. The network units A, B, A-B, can be part of the HVDC network 1 of figure 1.

Each of the units can be in one of six states that are summarized by their characteristics in the following table.

| Notation of the state of the network unit | State of the earthing switch associated with the network unit | Number of other network units connected to the network unit | Operating voltage present at the network unit |
|---|---|---|---|
| 0 | Closed | None | no |
| 1,0 | open | None | no |
| 1,1 | open | 1 | no |
| 1, n | open | More than 1 | no |
| 2,1 | open | 1 | yes |
| 2, n | open | More than 1 | yes |

Please note that the notation is arbitrary and can be chosen differently. The state 0 can be denoted as a grounded state, the states 1,x as standby states, the state 2,1 as a live or active state, and the state 2,n as a connected state. As the state control of individual units will have to interact with each other, each state diagram is based on the same structure independent on the type of unit. In case of a bus unit, the number of connected units can range between none and the total number of nmax units (the number of units the bus can maximally connect to).

During operation of the HVDC network, all necessary actions for every possible transition between states are defined and designated as a sequence. The task of the state control is to perform these sequences. Each transition between the individual states is done by a closing or an opening of a single switching unit (gate sequence). For example, in case of a bus unit, most of the transitions will be achieved by a gate sequence involving a switching unit of the same switching element (local). Some transitions might be caused by a gate sequence in a different switching element (remote). Examples of the remote-type transitions are those indicated with numerals 23 and 25 in figure 2. This is an important factor as the state control must be prepared for the possibility that the unit state changes without local action. This can, for example, play an important role in the coordination of protections. State "0" constitutes a special case. Usually, a closing of earthing switches within a unit is only possible when the unit is not connected to another unit (like the interlocking between grounding switches and disconnecting switches in an AC network). The only possible transition from state "0" is to state "1.0". Sequences transiting between "0" and "1.0" do not involve the opening or closing of a switching unit. The same holds true for other "internal" sequences such as deblocking a converter unit when in state 2.1 or 2.2. These sequences do not affect the status of the neighboring unit. In this respect, these "unit sequences" are different from the "gate sequences".

A given gate sequence usually will change the status in (at least) two units simultaneously. For example, the closing of a switching unit can be seen as the energization of one of the neighboring units, whereas the other unit changes from a live state to a coupled state.

If a network unit that is already connected to a second network unit additionally connects to a third network unit, then its state may not change. This is indicated by arrows pointing from the states 1,n and 2,n to itself.

The following sequence of events (steps S0 to S3) involving the network units A (first bus unit), A-B (transmission unit) and B (second bus unit) is shown for explanatory reasons.

The initial operating states of the network units are all 0. This means that the associated earthing switches are all closed.

Step S0: In this first step individual unit sequences are executed to move both bus units A, B and the transmission unit A-B from a grounded state (0) to a standby state (1,0) as the target operating state. The respective earth switches are opened.

Step S1: The target operating state of the bus unit A is 1,1. Bus unit A is connected to the transmission unit A-B by closing a switching unit in switching element A. Consequently, the status of the bus unit A and the transmission unit A-B each change from 1.0 to 1.1 (as indicated by the dashed arrow 23).

Now, the target operating state of the first bus unit A is 2,1, which is achieved by performing the following two steps or gate sequences S2, S3.

Step S2: Bus unit B is energized by closing a switching unit towards another network unit (not depicted in figure 2), wherein that other unit is in a live state (2,1). This is indicated by a dashed arrow 24. After this step, network unit A is in state 1,1, network unit A-B in state 1,1, and network unit B in state 2,1.

Step S3: Due to the connection performed under step S1, closing of the switching unit between B and A-B leads to a simultaneous energization of the transmission unit A-B and the bus unit A. The transmission unit A-B changes from a standby state (1,1) into a coupled state (2,2). The state of the bus unit A changes from the state 1,1 to 2,1. This is indicated by a dashed arrow 25.

Prior to initiating a gate sequence, the preconditions of the involved network units must be checked and necessary commands to prepare the units (via unit sequences) for the desired status change must be initiated by the grid controller. Once the gate sequence is initiated, an interlocking regime suitably integrated into the sequence might provide back-up security for incorrect gate sequence requests.

The determination of an initial operating state of a network unit can be achieved by means of corresponding measurements and signal processing.

## Claims

1. Method of operating an HVDC network, said HVDC network (1) comprising a first network unit (13) connected to at least a second network unit (16), and a switching unit (19) for connecting and disconnecting said first and said second network unit (13, 16), the method comprising the steps of
- determining an initial operating state of said first network unit (13),
- determining a target operating state for said first network unit (13), wherein said initial and said target operating states each depend on
• presence or absence of an operating voltage at said first network unit, and
• number of network units connected to said first network unit,
- transferring said first network unit (13) from said initial to said target operating state by means of said switching unit (19).

2. Method according to claim 1, wherein the respective operating state of said first network unit (13) further depends on an operating state of an earthing switch connected to said first network unit (13).

3. Method according to claim 2, wherein the respective operating state of said first network unit (13) is the same for any number of a plurality of network units connected to said first network unit (13).

4. Method according to claim 3, wherein the respective operating state of said first network unit (13) does not depend on any further information.

5. Method according to claim 4, wherein the respective operating state of said first network unit (13) is one of six predefined states: a grounded state, a first standby state, a second standby state, a third standby state, a live state, and a coupled state.

6. Method according to any of the preceding claims, wherein said first network unit (13) is connected to a plurality of network units via corresponding plurality of switching units, and wherein said transferring of the first network unit (13) from said initial state to said target operating state is achieved by operating said switching units in accordance with a predefined gate sequence.

7. Method according to claim 6, wherein said operating of said switching units comprises inrush current limiting.

8. Method according to any of the preceding claims, wherein said transferring said first network unit (13) from said initial to said target operating state is initiated by an HVDC network controller (18).

9. HVDC network (1) comprising a first network unit (13) connected to at least a second network unit (16), a switching unit (19) for connecting and disconnecting said first and said second network unit (13, 16), and an HVDC network controller (18) configured to operate said HVDC network (1) in accordance with the method of claims 1 to 8.

10. HVDC network (1) according to claim 9, wherein each of said first and second network unit is a converter unit (13), a transmission unit (P1), an electrode unit (15), or a bus unit (8).
